# EUROPEAN PATENT APPLICATION

(11) **EP 1 443 724 A1**
(43) Date of publication of application: **04.08.2004**
(21) Application number: 03720922.8
(22) Date of filing: 17.04.2003
(51) Int. Cl.: H04L 25/56

(54) **GATEWAY SYSTEM**

(30) Priority: 24.04.2002 JP 2002121674
(71) Applicant: MITSUBISHI DENKI KABUSHIKI KAISHA, Tokyo 100-8310 (JP)
(72) Inventor: FUSHIMI, Wataru, Mitsubishi Denki Kabushiki K., Tokyo 100-8310 (JP); SUZUKI, Shigeaki, Mitsubishi Denki K. K., Tokyo 100-8310 (JP)
(74) Representative: Pfenning, Meinig & Partner GbR
(86) International application number: PCT/JP2003/004912
(87) International publication number: WO 2003/092232

(57) **Abstract**

In a gateway system supporting a layered packet system, a packet loss in each short packet is detected. A sending-side gateway system and a receiving-side gateway system are provided in which an IP packet is assembled from short packets each including therein a short packet header which contains a sequence sign for each short packet having information for identifying a voice encoding method used at an encoding side, start information indicative of the start of an active voice part containing voice data, and number information indicative of the number of encoded voice signals.

## Description

### TECHNICAL FIELD

The present invention relates to a gateway system such as a voice transmission apparatus for transmitting signals such as a voice signal and the like by using IP packets, and more particularly, to a transmission format for short packets used for such a system.

### BACKGROUND ART

As a method for sending voice information signals by using an internet protocol (hereinafter referred to as "IP"), there have been used a system of converting each voice information signal into a packet and sending it with an IP packet header added thereto. However, the IP used here is a protocol of a connectionless type, and hence reliability is poor. Accordingly, in general, in order to supplement this problem, a packet communication device of the sending side provides a sequence number field in each IP packet, gives or attaches a number for detection of continuity to this field in the order of the packets to be sent, and sends them out. A packet communication device of the receiving side refers to the sequence number field of each of the received packets, and if fails to detect continuity from the sequence numbers, it is able to determine that there is a lack of a packet or a change in the order or sequence of the packets. As a result, when it is determined that continuity is lacking, the processing of keeping the quality of voice communications is performed by doing some packet loss recovery processing such as interpolation, etc.

Since in a known gateway system that supports a layered packet system, sequence numbers are respectively given or attached to IP packets alone, if there takes place an IP packet loss for example, it is impossible to determine whether there is a loss of short packets corresponding to a pertinent call. Therefore, there has been a problem that appropriate packet loss recovery processing could not be carried out, thus resulting in difficulty in keeping the quality of voice communications.

Accordingly, the present invention is intended to solve the problem as referred to above, and has for its object to achieve a gateway system which is capable of detecting occurrence of a packet loss of each short packet as well as transmitting packets along with added information so as to make effective use of lines.

### DISCLOSURE OF THE INVENTION

In the present invention, in a gateway system supporting a layered packet system, a packet loss in each short packet is detected. A sending-side gateway system, a receiving-side gateway system, and a related short packet transmission format are provided in which an IP packet is assembled from short packets each including therein a short packet header which contains a sequence sign for each short packet having information for identifying a voice encoding method used at an encoding side, start information indicative of the start of an active voice part containing voice data, and number information indicative of the number of encoded voice signals.

### BRIEF DESCRIPTION OF THE DRAWINGS

Fig. 1 is a block diagram of a gateway system according to a first embodiment of the present invention.
Fig. 2 is a configuration view of an IP packet to be sent and received according to the first embodiment of the present invention.
Fig. 3 is a view showing an example in which sequence signs are given according to the first embodiment of the present invention.
Fig. 4 is a block diagram of a gateway system according to a second embodiment of the present invention.
Fig. 5 is a view showing an example in which sequence signs are given according to the second embodiment of the present invention.
Fig. 6 is a block diagram of a gateway system according to a third embodiment of the present invention.
Fig. 7 is a view showing an example in which sequence signs are given according to the third embodiment of the present invention.
Fig. 8 is a block diagram of a gateway system according to a fourth embodiment of the present invention.
Fig. 9 is a view showing an example in which sequence signs are given according to the fourth embodiment of the present invention.
Fig. 10 is a block diagram of a gateway system according to a fifth embodiment of the present invention.
Fig. 11 is a view showing an example in which sequence signs are given according to the fifth embodiment of the present invention.
Fig. 12 is a block diagram of a gateway system according to a sixth embodiment of the present invention.
Fig. 13 is a view showing an example in which sequence signs are given according to the sixth embodiment of the present invention.

### BEST MODE FOR CARRYING OUT THE INVENTION

### Embodiment 1.

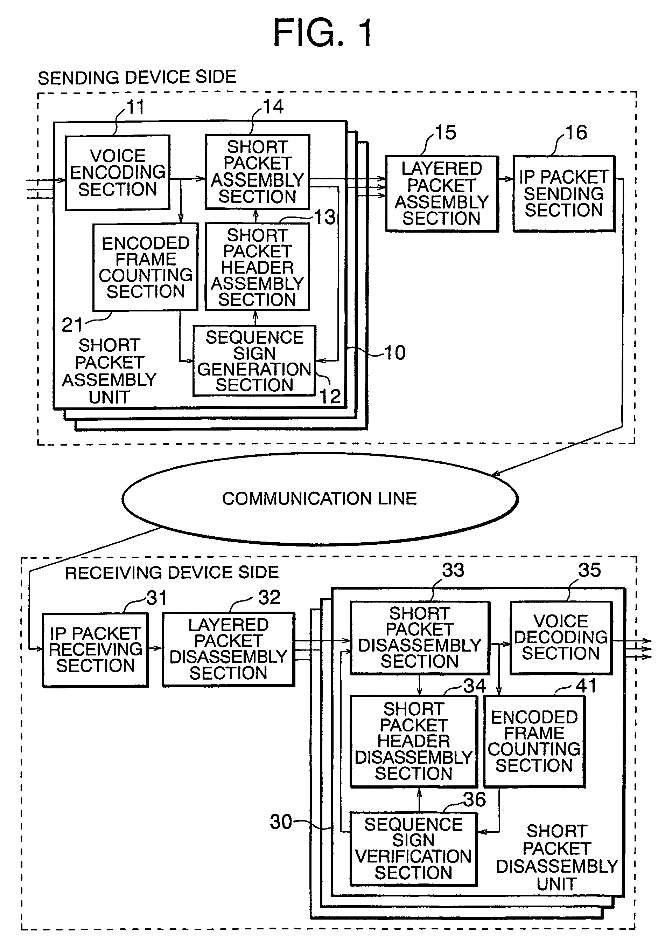

Fig. 1 shows a block diagram of a gateway system according to a first embodiment of the present invention. In Fig. 1, a short packet assembly unit 10 is a unit that assembles short packets by converting an input voice into encoded frames to create payload data, and by generating sequence signs to assemble short packet headers. A voice encoding section 11 performs voice encoding processing of a voice signal thereby to output an encoded voice signal. An encoded frame counting section 21 counts the number of frames (encoded frame) of the encoded voice signal which is output by the voice encoding section 11, and outputs the number of counts thereof. A sequence sign generation section 12 generates a sequence sign based on the number of counts output by the encoded frame counting section 21. A short packet header assembly section 13 creates and outputs a short packet header based on the sequence sign generated by the sequence sign generation section 12. A short packet assembly section 14 creates and outputs a short packet from the encoded voice signal output by the voice encoding section 11 and the short packet header output by the short packet header assembly section 13. A layered packet assembly section 15 assembles short packets for each channel into a standard IP packet. An IP packet sending section 16 sends the IP packet from the layered packet assembly section 15 to a communication line.

In addition, in Fig. 1, an IP packet receiving section 31 receives the IP packet from the communication line. A layered packet disassembly section 32 disassembles the standard IP packet received by the IP packet receiving section 31 into short packets for each channel. A short packet disassembly unit 30 disassembles each of the short packets assembled by the short packet assembly unit 10 to decode it into a voice. Specifically, a short packet disassembly section 33 further disassembles each of the short packets disassembled by the layered packet disassembly section 32 into an encoded voice signal and a short packet header. A short packet header disassembly section 34 extracts a sequence sign from the short packet header disassembled by the short packet disassembly section 33. An encoded frame counting section 41 counts the number of encoded frames disassembled by the short packet disassembly section 33. A voice decoding section 35 decodes a voice from the encoded voice signal disassembled by the short packet disassembly section 33. A sequence sign verification section 36 collates the value contained in the sequence sign extracted by the short packet header disassembly section 34 with the number of frames included in the short packet and counted by the encoded frame counting section 41. Although the short packet disassembly section 33 outputs the encoded voice signal disassembled from the short packet to the voice decoding section 35, and outputs the short packet header disassembled from the short packet to the short packet header disassembly section 34, the output to the voice decoding section 35 is not performed except when the sequence sign verification section 36 determines that the value contained in the sequence sign coincides with a corresponding expected value.

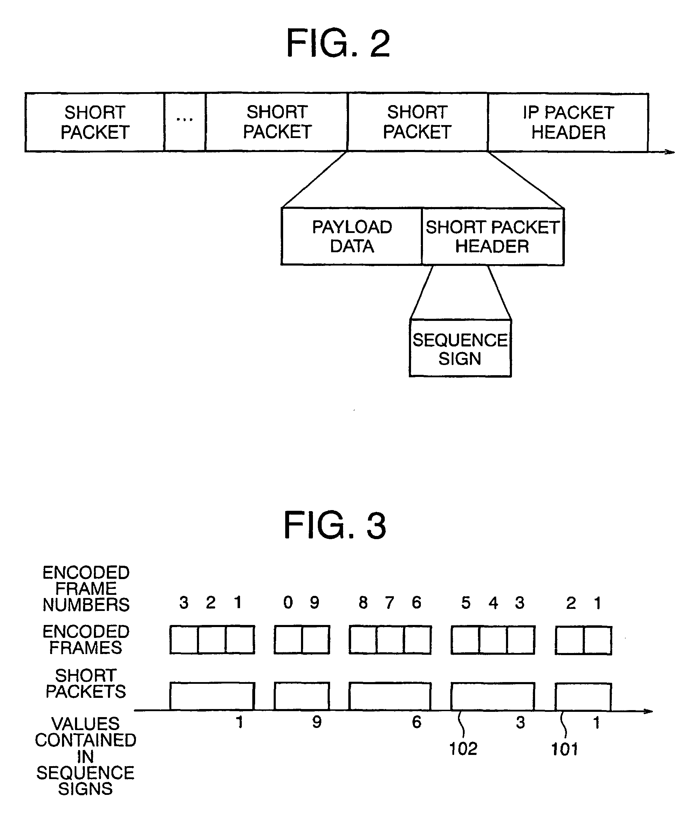

Fig. 2 is a configuration view of an IP packet sent and received between gateway devices according to this embodiment. The IP packet in this embodiment is composed of an IP packet header and a plurality of short packets, each of which includes a short packet header and payload data where voice encoded data and the like are stored.

Now, the operation of this embodiment will be described. First of all, the operation thereof at the sending device side of Fig. 1 will be stated below. The encoded frame counting section 21 counts the number of encoded frames which the voice encoding section 11 creates by encoding an input voice signal, and outputs the number of frames thus counted to the sequence sign generation section 12. Upon acquiring short packet sending information to notify that a current packet has been sent from the short packet assembly section 14, the sequence sign generation section 12 gives a remainder (0 - 9) of the number of created frames divided by 10 to each encoded frame as an encoded frame number. Moreover, upon acquiring the short packet sending information to notify the sending of the current packet from the short packet assembly section 14, the sequence sign generation section 12 generates a next encoded frame number as a new sequence sign.

Then, the short packet header assembly section 13 creates a short packet header by using the sequence sign generated by the sequence sign generation section 12, and outputs it to the short packet assembly section 14. The short packet assembly section 14 creates a short packet from the short packet header and the encoded frames output by the voice encoding section 11, and outputs it to the layered packet assembly section 15.

Fig. 3 is an example of attachment of a sequence sign in this embodiment. In Fig. 3, 1 is given or attached to a packet 101 as a value contained in its sequence sign, and in this example, the packet 101 includes two encoded frames. As a result, a value of 3, which is obtained by adding 2, the number of encoded frames included in the packet 101, to the value of 1 contained in the sequence sign of the packet 101, is given or attached to a packet 102 that is the packet following the packet 101, as a value contained in the sequence sign of the packet 102.

Thereafter, at the receiving device side. this IP packet is received by the IP packet receiving section 31 of the receiving device, and is disassembled by the layered packet disassembly section 32 into short packets for each channel, each of which is then disassembled into an encoded voice signal and a short packet header by the short packet disassembly section 33. The short packet header disassembly section 34 extracts the sequence sign from this short packet header, whereas the encoded frame counting section 41 counts the number of encoded frames included this short packet. The sequence sign verification section 36 sets a value, which is obtained by adding the number of encoded frames of this short packet output by the encoded frame counting section 41 to the value contained in the sequence sign of this short packet output by the short packet header disassembly section 34, as an expected value for the value contained in the sequence sign of the next short packet following this short packet.

When the value contained in the sequence sign of the next short packet coincides with this expected value, the sequence sign verification section 36 instructs the short packet disassembly section 33 in such a manner that the encoded voice signal is output from the short packet disassembly section 33 to the voice decoding section 35. On the other hand, when the value contained in the sequence sign of the next short packet does not coincide with this expected value, an error in the sending order or sequence has occurred or a packet loss has occurred, and hence appropriate error recovery processing is executed.

As described above, the value, which is obtained by adding the number of encoded frames included in the last short packet to the value contained in the last sequence sign, is provided as the sequence sign of the current short packet, whereby it is possible to detect a packet loss in each short packet as well as the number of encoded frames that have been lost in the packet loss. Therefore, appropriate packet loss recovery processing can be executed at the time of such a packet loss, thereby making it possible to provide comfortable speech communication quality to those who are talking over the telephone.

Further, in the case of a voice encoding method having no frame structure, similar effects can be achieved by handling a certain predetermined amount of data as similar to a frame.

Furthermore, even in the case of a gateway device having no voice encoding processing section and no voice decoding section, similar effects can also be achieved by handling a certain predetermined amount of data as similar to a frame.

### Embodiment 2.

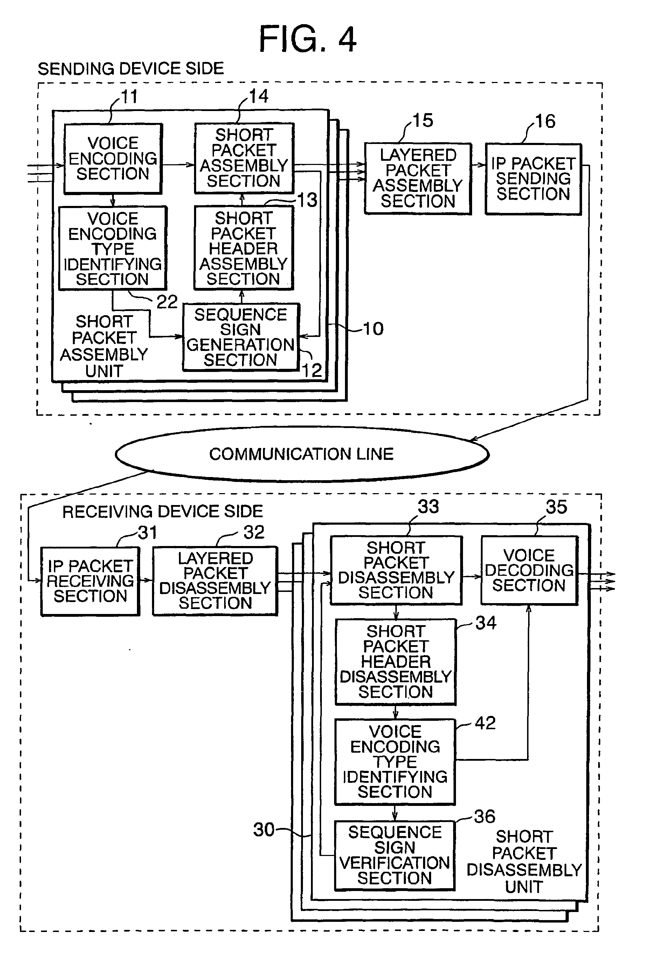

Fig. 4 shows a block diagram of a gateway system according to a second embodiment of the present invention. In Fig. 4, a voice encoding type identifying section 22 outputs the type of a voice encoding method, which is used by the voice encoding section 11 so as to encode an input voice signal, to the sequence sign generation section 12. A voice encoding type identifying section 42 determines the type of voice encoding from the sequence sign that is extracted from a short packet header by the short packet header disassembly section 34, and outputs voice encoding type information to the voice decoding section 35. Here, note that in Fig. 4, components of the same configurations as those of the first embodiment are identified by the same symbols, and an explanation thereof is omitted.

Now, the operation of this embodiment will be described. The voice encoding section 11 applies voice encoding processing to an input voice signal, and outputs the resultant encoded voice signal to the short packet assembly section 14. The voice encoding type identifying section 22 identifies the type of the voice encoding method used in the voice encoding processing by the information from the voice encoding section 11, and outputs the result of the identification to the sequence sign generation section 12. The sequence sign generation section 12 generates a sequence sign based on the short packet sending information from the short packet assembly section 14 and on the voice encoding type information from the voice encoding type identifying section 22. In this embodiment, a method is used in which a base value is set for each encoding type for example, the value contained in the sequence sign being defined as the base value plus a value (1 - 10) which is obtained by adding 1 to a remainder resulting from dividing a total number of generated short packets by 10. For example, when the encoding type is A, the base value is assumed to be 0, whereas when the encoding type is B, the base value is assumed to be 10. Then, in case of the encoding type A being used in the voice encoding section 11, the range of the value contained in the sequence sign is from 1 to 10, whereas in case of the encoding type B being used, the range of the value contained in the sequence sign becomes from 11 to 20.

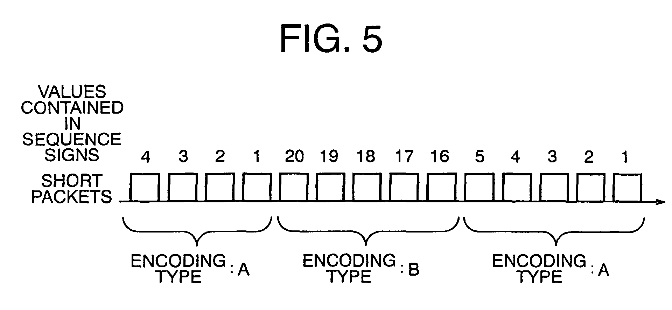

Next, the operations of the short packet header assembly section 13, the short packet assembly section 14, the layered packet assembly section 15 and the IP packet sending section 16 are the same as those in the first embodiment, and hence an explanation thereof is omitted. An example of a sequence sign given in this embodiment is shown in Fig. 5.

Now, the operation at the receiving device side of this embodiment will be described. The operations of the IP packet receiving section 31, the layered packet disassembly section 32, the short packet disassembly section 33 and the short packet header disassembly section 34 are the same as those in the first embodiment, and hence an explanation thereof is omitted.

The voice encoding type identifying section 42 determines the type of the voice encoding method used for the encoded voice signal contained in a short packet based on the sequence sign information output by the short packet disassembly section 33. In the example of Fig. 5, when the value contained in the sequence sign is from 1 to 10, it is determined that the voice encoding method is A, whereas when that is from 11 to 20, it is determined that the voice encoding method is B. After the determination, the voice encoding type identifying section 42 removes or deletes the information representing the type of the voice encoding method from this sequence sign (i.e., the base value representing the type of the voice encoding method is subtracted), and outputs the resultant sequence sign to the sequence sign verification section 36, and the result of the determination of the voice encoding type to the voice decoding section 35. The sequence sign verification section 36 verifies, based on the sequence sign output by the voice encoding type identifying section 42, whether there has occurred a loss of a short packet or the like. If the values contained in the sequence signs do not include any omission or the like, it is determined that the short packets have been able to be received normally, whereas if there is an omission in the values contained in the sequence signs, it is determined that the short packets have not been able to be received normally due to the occurrence of a packet loss or the like, and the result of such a determination is notified to the short packet disassembly section 33. After verifying from this notification that there is no omission in the short packets, the short packet disassembly section 33 outputs the encoded voice signal to the voice decoding section 35. In the voice decoding section 35, appropriate voice decoding processing with respect to the encoded voice signal output by the short packet disassembly section 33 is carried out based on the information from the voice encoding type identifying section 42.

As described above, by providing each short packet with a sequence sign added by the type information of a voice encoding method for an encoded voice signal included in each short packet, it is possible not only to detect a packet loss in each short packet, but also to recognize, at the receiving device side, the type of the voice encoding method for the encoded voice signal included in each short packet. As a result, appropriate packet loss recovery processing can be executed at the time of such a packet loss, thereby making it possible to provide comfortable speech communication quality to those who are talking over the telephone as well as to permit a plurality of voice encoding methods to coexist in a single sending and receiving system.

In addition, in the case of a voice encoding method having no frame structure, similar effects can be achieved by handling a certain predetermined amount of data as similar to a frame.

Although in this embodiment of the present invention, it is assumed that there are two types of voice encoding methods, A and B, in cases where three or more types of voice encoding methods are handled, it is preferable to define a base value for each voice encoding type.

### Embodiment 3.

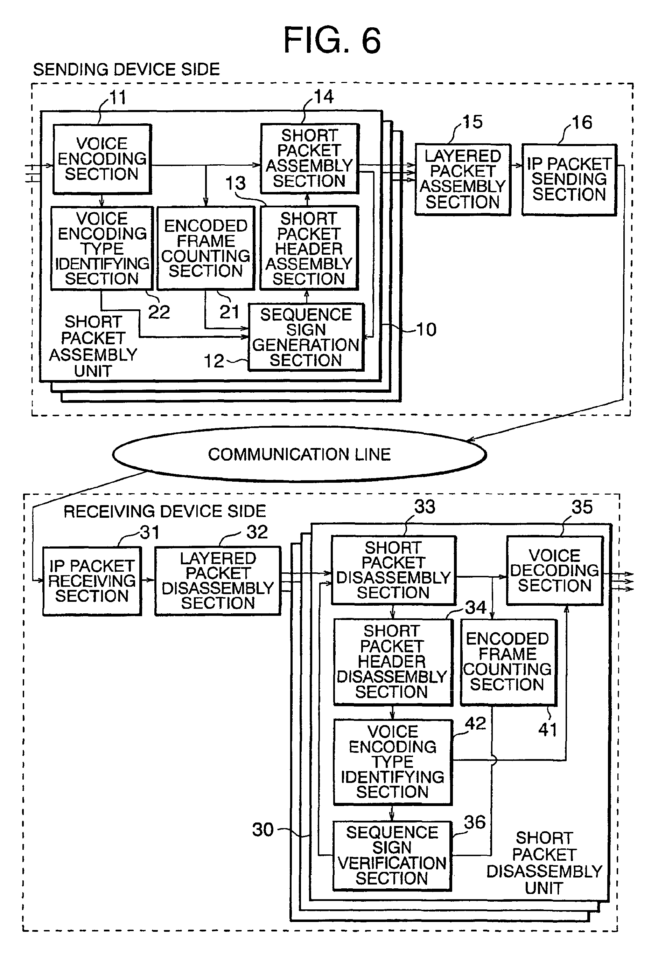

Fig. 6 shows a block diagram of a gateway system according to a third embodiment of the present invention. This third embodiment is constructed from the first embodiment and the second embodiment in combination with each other, and components of the same configurations as those of the first and second embodiments are identified by the same symbols, and an explanation thereof is omitted.

Now, the operation of this embodiment will be described. The voice encoding section 11 applies voice encoding processing to an input voice signal, and outputs the resultant encoded voice signal to the short packet assembly section 14, the encoded frame counting section 21 and the voice encoding type identifying section 22. The encoded frame counting section 21 counts the number of encoded frames of this encoded voice signal, and outputs the number of frames thus counted to the sequence sign generation section 12. The voice encoding type identifying section 22 identifies the type of the voice encoding method used in the voice encoding processing by the information from the voice encoding section 11, and outputs the result of the identification to the sequence sign generation section 12. The sequence sign generation section 12 gives or attaches a coded frame number to each encoded frame, based on the short packet sending information from the short packet assembly section 14, the encoded frame count information from the encoded frame counting section 21, and the voice encoding type information from the voice encoding type identifying section 22. Each encoded frame number is assumed to be a remainder (0 - 9) of a total number of sent encoded frames divided by 10. In addition, upon acquiring the short packet sending information to notify the sending of the current packet from the short packet assembly section 14, the sequence sign generation section 12 generates a sequence sign that includes the result of addition of an encoded frame number to be attached to the next encoded frame and a base value defined for each identification result of the type of a voice encoding method output by the voice encoding type identifying section 22. In this embodiment, when the encoding type is A, the base value is assumed to be 0, whereas when the encoding type is B, the base value is assumed to be 10. Then, in case of the encoding type A being used in the voice encoding section 11, the range of the value contained in the sequence sign is from 0 to 9, whereas in case of the encoding type B being used, the range of the value contained in the sequence sign becomes from 10 to 19.

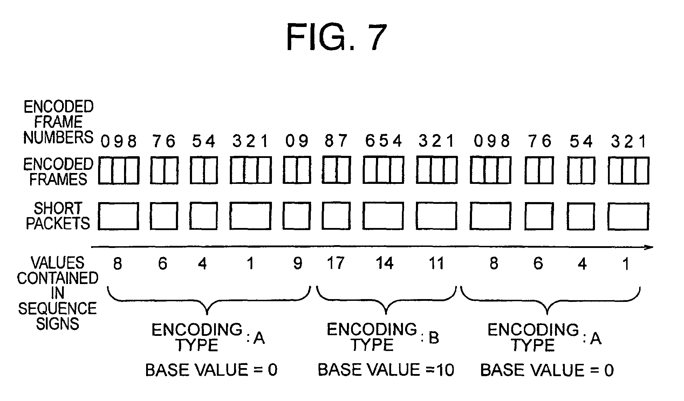

Next, the operations of the short packet header assembly section 13, the short packet assembly section 14, the layered packet assembly section 15 and the IP packet sending section 16 are the same as those in the first embodiment, and hence an explanation thereof is omitted. An example of a sequence sign given in this embodiment is shown in Fig. 7.

Now, the operation at the receiving device side of this embodiment will be described. The operations of the IP packet receiving section 31, the layered packet disassembly section 32, the short packet disassembly section 33 and the short packet header disassembly section 34 are the same as those in the first embodiment, and hence an explanation thereof is omitted.

The voice encoding type identifying section 42 determines the type of the voice encoding method used for the encoded voice signal contained in a short packet based on the sequence sign information output by the short packet disassembly section 33. In the example of Fig. 7, when the value contained in the sequence sign is from 0 to 9, it is determined that the voice encoding method is A, whereas when that is from 10 to 19, it is determined that the voice encoding method is B. After the determination, the voice encoding type identifying section 42 removes the information representing the type of the voice encoding method from this sequence sign (i.e., the base value representing the type of the voice encoding method is subtracted), and outputs the resultant sequence sign to the sequence sign verification section 36, and the result of the determination of the voice encoding type to the voice decoding section 35.

The encoded frame counting section 41 counts the number of encoded frames included in this short packet. The sequence sign verification section 36 sets a value, which is obtained by adding the number of encoded frames of this short packet output by the encoded frame counting section 41 to the value contained in the sequence sign of this short packet output by the short packet header disassembly section 34, as an expected value for the value contained in the sequence sign of the next short packet following this short packet.

When the value contained in the sequence sign of the next received short packet coincides with this expected value, the sequence sign verification section 36 instructs the short packet disassembly section 33 in such a manner that the encoded voice signal is output from the short packet disassembly section 33 to the voice decoding section 35. On the other hand, when the value contained in the sequence sign of the next short packet does not coincide with this expected value, an error in the sending order or sequence has occurred or a packet loss has occurred, and hence appropriate error recovery processing is executed.

As described above, by providing each short packet with a sequence sign, which is increased by the number of encoded frames included in each short packet and which is added by the type information of a voice encoding method for an encoded voice signal included in each short packet, it is possible not only to detect a packet loss in each short packet and the number of encoded frames lost by the packet loss, but also to recognize the type of the voice encoding method for the encoded voice signal included in each short packet. As a result, appropriate packet loss recovery processing can be executed at the time of such a packet loss, thereby making it possible to provide comfortable speech communication quality to those who are talking over the telephone as well as to permit a plurality of voice encoding methods to coexist in a single sending and receiving system.

In addition, in the case of a voice encoding method having no frame structure, similar effects can be achieved by handling a certain predetermined amount of data as similar to a frame.

Although in this embodiment of the present invention, it is assumed that there are two types of voice encoding methods, A and B, in cases where three or more types of voice encoding methods are handled, it is preferable to define a base value for each voice encoding type.

### Embodiment 4.

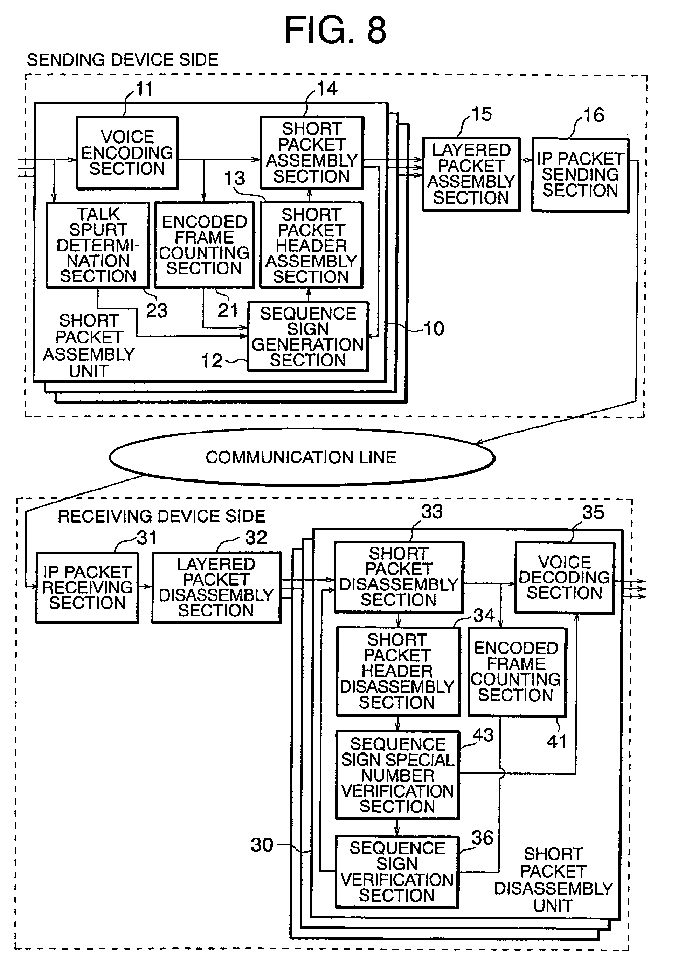

Fig. 8 shows a block diagram of a gateway system according to a fourth embodiment of the present invention. In Fig. 8, a talk spurt determination section 23 monitors active voice or silence of a series of voice signals, and determines active voice parts (hereinafter referred to as talk spurts). A sequence sign special number verification section 43 determines whether a short packet is one having a sequence sign that contains a special number meaning the head of a talk spurt. Here, note that the special number means the value contained in the sequence sign given to a short packet including an encoded frame of a start portion of an active voice part of a voice signal. Incidentally, in Fig. 8, components of the same configurations as those of the first embodiment are identified by the same symbols, and an explanation thereof is omitted.

Now, the operation of this embodiment will be described. The voice encoding section 11 applies voice encoding processing to an input voice signal, and outputs the resultant encoded voice signal to the short packet assembly section 14 and the encoded frame counting section 21. The encoded frame counting section 21 counts the number of encoded frames of this encoded voice signal, and outputs the number of frames thus counted to the sequence sign generation section 12. The talk spurt determination section 23 monitors active voice or silence of the voice signal input to the voice encoding section 11, and outputs the result of such monitoring to the sequence sign generation section 12 as talk spurt determination information. The sequence sign generation section 12 provides or attaches an encoded frame number to each encoded frame based on the short packet sending information from the short packet assembly section 14, the encoded frame count information from the encoded frame counting section 21, and the talk spurt determination information from the talk spurt determination section 23. Each encoded frame number is assumed to be a value (1 - 9) that is obtained by adding 1 to a remainder of a total number of sent encoded frames divided by 9. However, when the talk spurt determination section 23 identifies that the input voice has changed from a silent part into an active voice part, a notification to that effect is made from the talk spurt determination section 23 to the sequence sign generation section 12, so that the sequence sign generation section 12 provides a special number of 0 as an encoded frame number. As a result, the range of the encoded frame number becomes from 0 to 9. Moreover, upon acquiring the short packet sending information to notify the sending of the current packet from the short packet assembly section 14, the sequence sign generation section 12 generates a sequence sign containing a next encoded frame number to be attached to the new encoded frame.

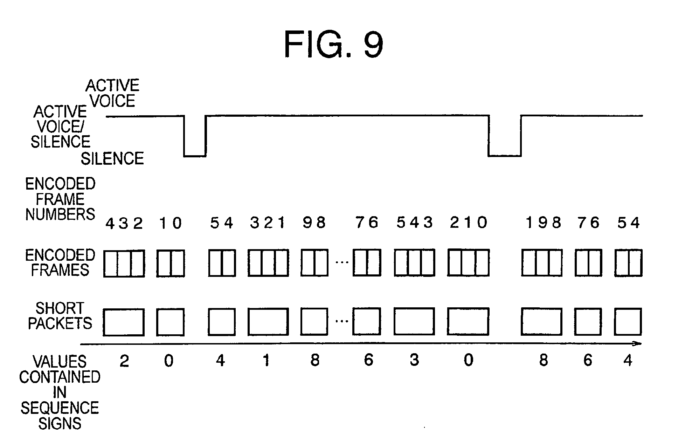

Next, the operations of the short packet header assembly section 13, the short packet assembly section 14, the layered packet assembly section 15 and the IP packet sending section 16 are the same as those in the first embodiment, and hence an explanation thereof is omitted. An example of a sequence sign given in this embodiment is shown in Fig. 9.

Now, the operation at the receiving device side of this embodiment will be described. The operations of the IP packet receiving section 31, the layered packet disassembly section 32, the short packet disassembly section 33 and the short packet header disassembly section 34 are the same as those in the first embodiment, and hence an explanation thereof is omitted.

The encoded frame counting section 41 counts the number of encoded frames included in this short packet. The sequence sign special number verification section 43 determines whether the value contained in the sequence sign of the short packet is a special number, and when it is a special number, it is identified that the encoded voice signal of this short packet is the head of a talk spurt. In the example of Fig. 9, the value "0" contained in the sequence sign is a special number. When the value contained in the sequence sign is a special number, a notification of a talk spurt having been started is made to the sequence sign verification section 36 and the voice decoding section 35. The encoded frame counting section 41 counts the number of encoded frames included in this short packet. The sequence sign verification section 36 executes the processing of initializing and restarting the sequence sign verification based on the special number verification information from the sequence sign special number verification section 43, obtains an expected value for the value contained in the sequence sign of the next short packet to be processed subsequently, based on the encoded frame count information from the encoded frame counting section 41, and collates the sequence sign information from the sequence sign special number verification section 43 with a previous or last expected value.

When the value contained in the sequence sign of the next received short packet output by the sequence sign special number verification section 43 coincides with this expected value, the sequence sign verification section 36 instructs the short packet disassembly section 33 in such a manner that the encoded voice signal is output from the short packet disassembly section 33 to the voice decoding section 35. On the other hand, when the value contained in the sequence sign of the next short packet output by the sequence sign special number verification section 43 does not coincide with this expected value, an error in the sending order or sequence has occurred or a packet loss has occurred, and hence appropriate error recovery processing is executed.

As described above, by providing a sequence sign, which is increased by the number of encoded frames included in each short packet, to each short packet, with a special number being attached to a short packet including an encoded frame of the head of a talk spurt, it is possible not only to detect a packet loss in each short packet and the number of encoded frames lost by the packet loss, but also to recognize the head of the talk spurt. Accordingly, appropriate packet loss recovery processing can be executed at the time of such a packet loss, thereby making it possible to provide comfortable speech communication quality to those who are talking over the telephone.

In addition, since the internal states in the voice encoding section and in the decoding section, respectively, are reset at the head of the talk spurt, both of these sections can always maintain their same internal states. Moreover, the receiving side fluctuation or variation absorption buffer (not shown particularly) can be initialized at the head of the talk spurt, as a result of which even if both sending side equipment and receiving side equipment do not use synchronized clocks, there will not take place an excess or deficiency of the data to be received and played in a unit of time at the receiving side, thus making it possible to prevent overflow or underflow of the received buffer.

Further, in the case of a voice encoding method having no frame structure, similar effects can be achieved by handling a certain predetermined amount of data as similar to a frame.

Furthermore, even if the attachment of a sequence sign containing a prescribed specific value to a short packet including the head encoded frame of a talk spurt is carried out solely without combination with a value related to the number of encoded frames, a considerable effect can be obtained.

### Embodiment 5.

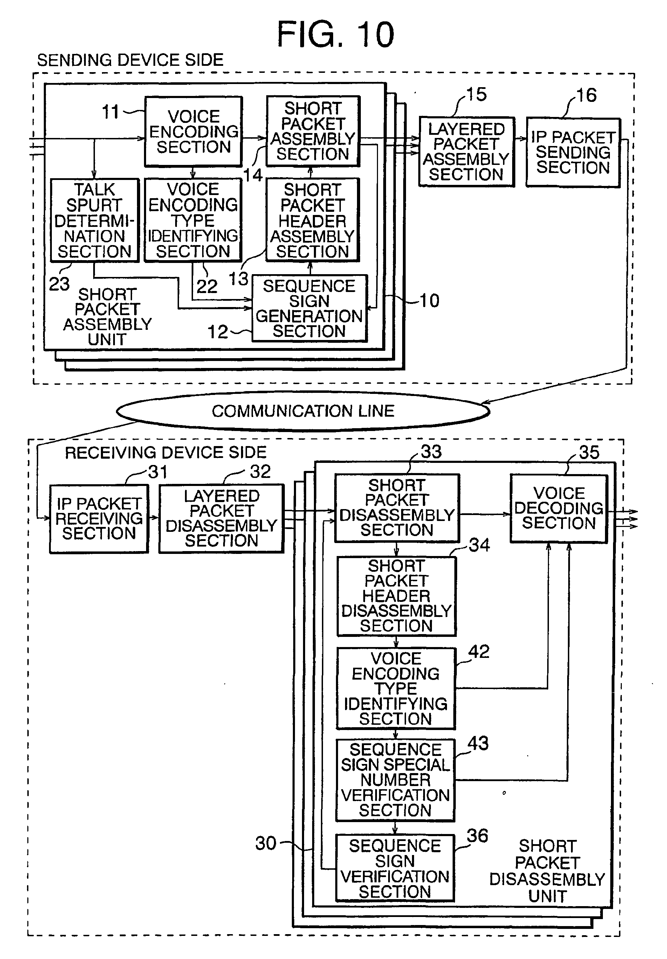

Fig. 10 shows a block diagram of a gateway system according to a fifth embodiment of the present invention. This fifth embodiment includes, in addition to the configuration of the second embodiment, a talk spurt determination section 23 and a sequence sign special number verification section 43. Incidentally, in Fig. 10, components of the same configurations as those of the second embodiment are identified by the same symbols, and an explanation thereof is omitted.

Now, the operation of this embodiment will be described. The voice encoding section 11 applies voice encoding processing to an input voice signal, and outputs the resultant encoded voice signal to the short packet assembly section 14. The talk spurt determination section 23 monitors active voice or silence of the voice signal input to the voice encoding section 11, and outputs the result of such monitoring to the sequence sign generation section 12 as talk spurt determination information. The voice encoding type identifying section 22 identifies the type of the voice encoding method used in the voice encoding processing by the information from the voice encoding section 11, and outputs the result of the identification to the sequence sign generation section 12. The sequence sign generation section 12 generates a sequence sign based on the short packet sending information from the short packet assembly section 14, the talk spurt determination information from the talk spurt determination section 23, and the voice encoding type information from the voice encoding type identifying section 22. In this embodiment, a base value is set for each encoding type for example, and a sequence sign is formed by adding the base value to a remainder (0 - 8) which is obtained by dividing a total number of thus far sent short packets by 9. For example, assuming that the base value is 0 in case of an encoding type A being used in the voice encoding section 11, and that the base value is 10 in case of using an encoding type B, the value contained in the sequence sign becomes from 0 to 8 in the case of the encoding type A, whereas it becomes from 10 to 18 in the case of the encoding type B.

In addition, when the talk spurt determination section 23 identifies that the input voice has changed from a silent part into a voice part, the information of such identification is notified to the sequence sign generation section 12. In this case, the sequence sign generation section 12 assumes that the value contained in the sequence sign is a value which is obtained by adding the base values for the respective voice encoded types to a special number of 0. As a result, the range of the value contained in the sequence sign for the encoding type A becomes from 0 to 9, whereas the range of the value contained in the sequence sign for the encoding type B becomes from 10 to 19.

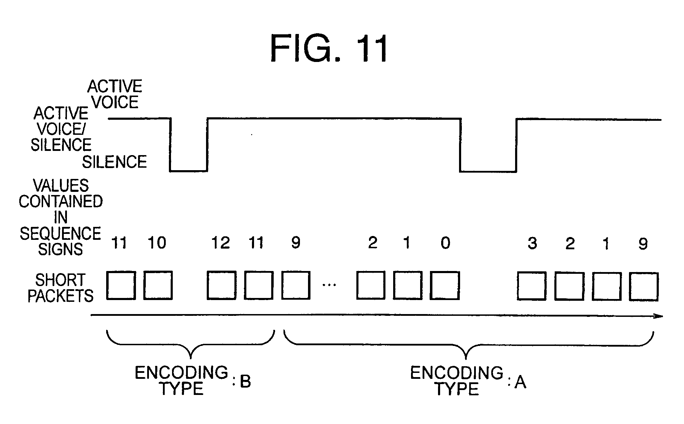

Next, the operations of the short packet header assembly section 13, the short packet assembly section 14, the layered packet assembly section 15 and the IP packet sending section 16 are the same as those in the first embodiment, and hence an explanation thereof is omitted. An example of a sequence sign given in this embodiment is shown in Fig. 11.

Now, the operation at the receiving device side of this embodiment will be described. The operations of the IP packet receiving section 31, the layered packet disassembly section 32, the short packet disassembly section 33 and the short packet header disassembly section 34 are the same as those in the first embodiment, and hence an explanation thereof is omitted.

The voice encoding type identifying section 42 determines the type of the voice encoding method used for the encoded voice signal included in a short packet based on the sequence sign information output by the short packet disassembly section 33. In the example of Fig. 11, when the value contained in the sequence sign is from 0 to 9, it is determined that the voice encoding method is A, whereas when that is from 10 to 19, it is determined that the voice encoding method is B. After the determination, the voice encoding type identifying section 42 removes the information representing the type of the voice encoding method from this sequence sign (i.e., the base value representing the type of the voice encoding method is subtracted), and outputs the resultant sequence sign to the sequence sign special number verification section 43, and the result of the determination of the voice encoding type to the voice decoding section 35. The sequence sign special number verification section 43 verifies whether the value contained in the sequence sign output by the voice encoding type identifying section 42 is a special number. In the example of Fig. 11, the value "0" contained in the sequence sign is a special number. When the value contained in the sequence sign is a special number, a notification of a talk spurt having been started is made to the sequence sign verification section 36 and the voice decoding section 35. The sequence sign verification section 36 executes the processing of once initializing and restarting the sequence sign verification based on the talk spurt start notification from the sequence sign special number verification section 43, and verifies based on sequence signs whether there takes place a short packet loss or the like. If the values contained in the sequence signs do not include any omission or the like, it is determined that the short packets have been able to be received normally, whereas if there is an omission in the values contained in the sequence signs, it is determined that the short packets have not been able to be received normally due to the occurrence of a packet loss or the like, and the result of such a determination is notified to the short packet disassembly section 33. After verifying from this notification that there is no omission in the short packets, the short packet disassembly section 33 outputs the encoded voice signal to the voice decoding section 35. The voice decoding section 35 performs appropriate voice decoding processing with respect to this encoded voice signal based on the information from the voice encoding type identifying section 42 and the sequence sign special number verification section 43.

As described above, by providing a sequence sign, which is added by the type information of a voice encoding method for an encoded voice signal included in each short packet, to each short packet, with a special number being attached to a short packet including a head encoded frame of a talk spurt, it is possible not only to detect a packet loss in each short packet but also recognize the type of the voice encoding method for the encoded voice signal included in each short packet as well as the head of the talk spurt. As a result, appropriate packet loss recovery processing can be executed at the time of such a packet loss, thereby making it possible to provide comfortable speech communication quality to those who are talking over the telephone as well as to permit a plurality of voice encoding methods to coexist in a single sending and receiving system.

In addition, since the internal states in the voice encoding section and in the decoding section, respectively, are reset at the head of the talk spurt, both of these sections can always maintain their same internal states. Moreover, the receiving side fluctuation or variation absorption buffer can be initialized at the head of the talk spurt, as a result of which even if both sending side equipment and receiving side equipment do not use synchronized clocks, there will not take place an excess or deficiency of the data to be received and played in a unit of time at the receiving side, thus making it possible to prevent overflow or underflow of the received buffer.

Further, in the case of a voice encoding method having no frame structure, similar effects can be achieved by handling a certain predetermined amount of data as similar to a frame.

Although in this embodiment of the present invention, it is assumed that there are two types of voice encoding methods, A and B, in cases where three or more types of voice encoding methods are handled, it is preferable to define a base value for each voice encoding type.

### Embodiment 6.

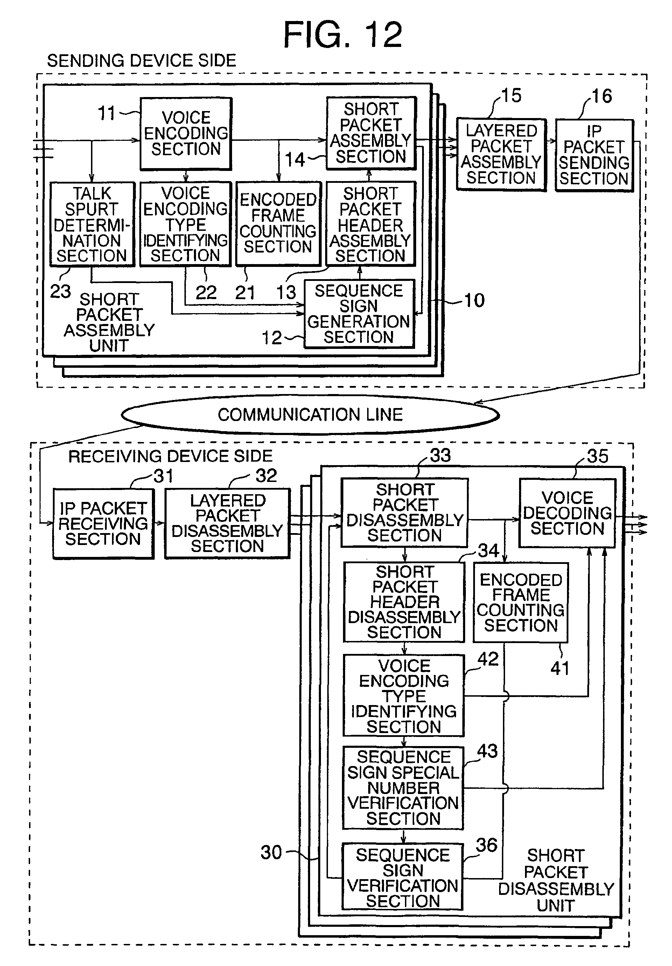

Fig. 12 shows a block diagram of a gateway system according to a sixth embodiment of the present invention. This sixth embodiment is constructed of the fourth embodiment and the fifth embodiment in combination with each other. Incidentally, in Fig. 12, components of the same configurations as those of the fourth and fifth embodiments are identified by the same symbols, and an explanation thereof is omitted.

Now, the operation of this embodiment will be described. The voice encoding section 11 applies voice encoding processing to an input voice signal, and outputs the resultant encoded voice signal to the short packet assembly section 14, the encoded frame counting section 21 and the voice encoding type identifying section 22. The encoded frame counting section 21 counts the number of encoded frames of this encoded voice signal, and outputs the number of frames thus counted to the sequence sign generation section 12. The talk spurt determination section 23 monitors active voice or silence of the voice signal input to the voice encoding section 11, and outputs the result of such monitoring to the sequence sign generation section 12 as talk spurt determination information. The voice encoding type identifying section 22 identifies the type of the voice encoding method used in the voice encoding processing by the information from the voice encoding section 11, and outputs the result of the identification to the sequence sign generation section 12. The sequence sign generation section 12 provides or attaches an encoded frame number to each encoded frame based on the short packet sending information from the short packet assembly section 14, the encoded frame count information from the encoded frame counting section 21, the talk spurt determination information from the talk spurt determination section 23 and the voice encoding type information from the voice encoding type identifying section 22. Each encoded frame number is assumed to be a value (1 - 9) that is obtained by adding 1 to a remainder of a total number of sent encoded frames divided by 9. However, when the talk spurt determination section 23 identifies that the input voice has changed from a silent part into an active voice part, a notification to that effect is made from the talk spurt determination section 23 to the sequence sign generation section 12, so that the sequence sign generation section 12 provides a special number of 0 as an encoded frame number. As a result, the range of the encoded frame number becomes from 0 to 9. Moreover, upon acquiring the short packet sending information to notify the sending of the current packet from the short packet assembly section 14, the sequence sign generation section 12 generates a sequence sign that includes the result of addition of an encoded frame number to be attached to the next encoded frame and a base value defined for each identification result of the type of a voice encoding method output by the voice encoding type identifying section 22. In this embodiment, when the encoding type is A, the base value is assumed to be 0, whereas when the encoding type is B, the base value is assumed to be 10. Then, in case of the encoding type A being used in the voice encoding section 11, the range of the value contained in the sequence sign is from 0 to 9, whereas in case of the encoding type B being used, the range of the value contained in the sequence sign becomes from 10 to 19.

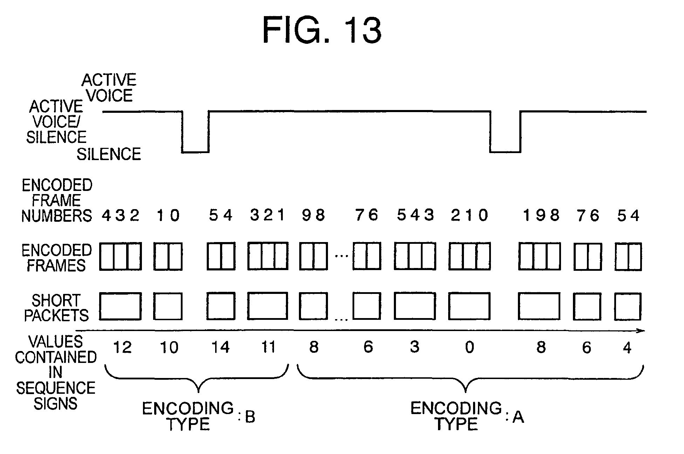

Next, the operations of the short packet header assembly section 13, the short packet assembly section 14, the layered packet assembly section 15 and the IP packet sending section 16 are the same as those in the first embodiment, and hence an explanation thereof is omitted. An example of a sequence sign given in this embodiment is shown in Fig. 13.

Now, the operation at the receiving device side of this embodiment will be described. The operations of the IP packet receiving section 31, the layered packet disassembly section 32, the short packet disassembly section 33 and the short packet header disassembly section 34 are the same as those in the first embodiment, and hence an explanation thereof is omitted.

The encoded frame counting section 41 counts the number of encoded frames included in this short packet. The voice encoding type identifying section 42 determines the type of the voice encoding method used for the encoded voice signal included in the short packet based on the sequence sign information output by the short packet disassembly section 33. In the example of Fig. 13, when the value contained in the sequence sign is from 0 to 9, it is determined that the voice encoding method is A, whereas when that is from 10 to 19, it is determined that the voice encoding method is B. After the determination, the voice encoding type identifying section 42 removes the information representing the type of the voice encoding method from this sequence sign (i.e., the base value representing the type of the voice encoding method is subtracted), and outputs the resultant sequence sign to the sequence sign special number verification section 43, and the result of the determination of the voice encoding type to the voice decoding section 35. The sequence sign special number verification section 43 verifies whether the value contained in the sequence sign output by the voice encoding type identifying section 42 is a special number. In the example of Fig. 13, the value "0" contained in the sequence sign is a special number. When the value contained in the sequence sign is a special number, a notification of a talk spurt having been started is made to the sequence sign verification section 36 and the voice decoding section 35. The encoded frame counting section 41 counts the number of encoded frames included in this short packet. The sequence sign verification section 36 executes the processing of initializing and restarting the sequence sign verification based on the special number verification information from the sequence sign special number verification section 43, obtains an expected value for the value contained in the sequence sign of the next short packet to be processed subsequently, based on the encoded frame count information from the encoded frame count information 41, and collates the value contained in the sequence sign output by the sequence sign special number verification section 43 with a previous or last expected value.

When the value contained in the sequence sign of the next received short packet output by the sequence sign special number verification section 43 coincides with this expected value, the sequence sign verification section 36 instructs the short packet disassembly section 33 in such a manner that the encoded voice signal is output from the short packet disassembly section 33 to the voice decoding section 35. On the other hand, when the value contained in the sequence sign of the next short packet output by the sequence sign special number verification section 43 does not coincide with this expected value, an error in the sending order or sequence has occurred or a packet loss has occurred, and hence appropriate error recovery processing is executed.

As described above, by providing, as the value contained in the sequence sign of the current short packet, a value which is obtained by adding the number of encoded frames included in the last short packet to the value included in the last sequence sign, with a special number being attached to a short packet including a head encoded frame of a talk spurt, it is possible to detect a packet loss in each short packet as well as the number of encoded frames that have been lost in the packet loss. Also, the type of the voice encoding method on which the encoded voice signal included in a short packet is based can be recognized at the receiving device side, and the head of a talk spurt can be additional recognized. As a result, appropriate packet loss recovery processing can be executed at the time of such a packet loss, thereby making it possible to provide comfortable speech communication quality to those who are talking over the telephone as well as to permit a plurality of voice encoding methods to coexist in a single sending and receiving system.

In addition, since the internal states in the voice encoding section and in the decoding section, respectively, are reset at the head of the talk spurt, both of these sections can always maintain their same internal states. Moreover, the receiving side fluctuation or variation absorption buffer can be initialized at the head of the talk spurt, as a result of which even if both sending side equipment and receiving side equipment do not use synchronized clocks, there will not take place an excess or deficiency of the data to be received and played in a unit of time at the receiving side, thus making it possible to prevent overflow or emptiness of the received buffer.

Further, in the case of a voice encoding method having no frame structure, similar effects can be achieved by handling a certain predetermined amount of data as similar to a frame.

Although in this embodiment of the present invention, it is assumed that there are two types of voice encoding methods, A and B, in cases where three or more types of voice encoding methods are handled, it is preferable to define a base value for each voice encoding type.

Incidentally, it is needless to say that the present invention is not limited to the above-mentioned respective embodiments, but includes any possible combination thereof.

### INDUSTRIAL APPLICABILITY

According to the present invention, there can be provided a gateway system having additional or optional functions such as those stated below. That is, more detailed information can be obtained upon occurrence of a packet loss, or a plurality of voice encoding methods are able to be used with a single sending and receiving system, or recognizing the head of a voice part is able to provide more comfortable speech communication quality for those who are talking over the telephone.

## Claims

1. A gateway system **characterized by** comprising at a sending side:
a voice encoding section for creating encoded frames from an input voice signal;
a sequence sign generation section for generating sequence signs each containing a value selected from a set of values allocated to each type of information included in each of said encoded frames;
a short packet header assembly section for creating short packet headers including said sequence signs, respectively;
a short packet assembly section for creating short packets from said encoded frames and said short packet headers; and
a sending section for sending these short packets while assembling said short packets into a layered packet.

2. The gateway system as set forth in claim 1, **characterized in that** said sequence sign generation section counts the number of frames included in a short packet created by said short packet assembly section, and generates the next sequence sign containing a value which is obtained by adding the number of frames thus counted to the value contained in a current sequence sign.

3. The gateway system as set forth in claim 1, **characterized in that** said sequence sign generation section calculates the value contained in a sequence sign from a range of values which is allocated beforehand according to the type of a voice encoding method used by said voice encoding section.

4. The gateway system as set forth in claim 1, **characterized in that** said sequence sign generation section generates a sequence sign containing a prescribed special number for a short packet which includes a head encoded frame of an active voice part of said input voice signal.

5. The gateway system as set forth in claim 3, **characterized in that** said sequence sign generation section generates a sequence sign containing a prescribed special number for a short packet which includes a head encoded frame of an active voice part of said input voice signal.

6. The gateway system as set forth in claim 1, **characterized in that** said sequence sign generation section generates a sequence sign containing a value which is obtained by adding the number of encoded frames included in the last sent short packet to the value contained in the sequence sign of said last sent short packet, and which meets at least one of the following two conditions, one being that said value is within a range of values allocated beforehand according to the type of a voice encoding method used by said voice encoding section, the other being that said value is a prescribed special value in case of a short packet including a head encoded frame of an active voice part of said input voice signal.

7. The gateway system as set forth in claim 1, **characterized by** comprising at a receiving side:
a receiving section for receiving said layered packet to disassemble it into said short packets;
a short packet header disassembling section for reading out a short packet header from each of said short packets; and
a sequence sign verification section for reading out the value contained in said sequence sign from said short packet header to identify a loss of short packets and a sequence error thereof.

8. The gateway system as set forth in claim 2, **characterized by** comprising at a receiving side:
a receiving section for receiving said layered packet to disassemble it into said short packets;
a short packet header disassembling section for reading out a short packet header from each of said short packets; and
a sequence sign verification section for reading out the value contained in said sequence sign from said short packet header to identify a loss of short packets and a sequence error thereof;
wherein said sequence sign verification section collates the value, which is obtained by adding the value contained in the sequence sign of the last received short packet to the number of encoded frames included in said last received short packet, with the value contained in the sequence sign of a currently received short packet, and identifies a loss of short packets and a sequence error thereof from an unmatched packet.

9. The gateway system as set forth in claim 3, **characterized by** comprising at a receiving side:
a receiving section for receiving said layered packet to disassemble it into said short packets;
a short packet header disassembling section for reading out a short packet header from each of said short packets; and
a sequence sign verification section for reading out the value contained in said sequence sign from said short packet header to identify a loss of short packets and a sequence error thereof;
wherein said sequence sign verification section identifies the type of the voice encoding method from a range of values where the value contained in said sequence sign is included.

10. The gateway system as set forth in claim 4, **characterized by** comprising at a receiving side:
a receiving section for receiving said layered packet to disassemble it into said short packets;
a short packet header disassembling section for reading out a short packet header from each of said short packets; and
a sequence sign verification section for reading out the value contained in said sequence sign from said short packet header to identify a loss of short packets and a sequence error thereof;
wherein said sequence sign verification section collates the value contained in said sequence sign with said special number, and identifies a matched encoded frame as the head encoded frame of the active voice part of said input voice signal.

11. The gateway system as set forth in claim 5, **characterized by** comprising at a receiving side:
a receiving section for receiving said layered packet to disassemble it into said short packets;
a short packet header disassembling section for reading out a short packet header from each of said short packets; and
a sequence sign verification section for reading out the value contained in said sequence sign from said short packet header to identify a loss of short packets and a sequence error thereof;
wherein said sequence sign verification section identifies the type of the voice encoding method from a range of values where the value contained in said sequence sign is included, and collates the value contained in said sequence sign with said special number, and identifies a matched encoded frame as the head encoded frame of the active voice part of said input voice signal.

12. The gateway system as set forth in claim 6, **characterized by** comprising at a receiving side:
a receiving section for receiving said layered packet to disassemble it into said short packets;
a short packet header disassembling section for reading out a short packet header from each of said short packets; and
a sequence sign verification section for reading out the value contained in said sequence sign from said short packet header to identify a loss of short packets and a sequence error thereof;
wherein said sequence sign verification section collates the value, which is obtained by adding the value contained in the sequence sign of the last received short packet to the number of encoded frames included in said last received short packet, with the value contained in the sequence sign of a currently received short packet, and identifies a loss of short packets and a sequence error thereof from an unmatched packet, and said sequence sign verification section further performs at least one of the identification of the type of the voice encoding method from a range of values where the value contained in said sequence sign is included, and the identification of the head encoded frame of the active voice part of said input voice signal based on matching between the value contained in said sequence sign and said special number.
